# EUROPEAN PATENT SPECIFICATION

(11) **EP 3 117 043 B1**
(45) Date of publication and mention of the grant of the patent: **16.05.2018**
(21) Application number: 15718599.2
(22) Date of filing: 16.03.2015
(51) Int. Cl.: E02B 15/10

(54) **FLOATING STRUCTURE FOR CLEANSING WATER CONTAMINATED WITH HYDROCARBONS**
SCHWIMMENDE STRUKTUR ZUR REINIGUNG VON MIT KOHLENWASSERSTOFFEN VERSCHMUTZTEM WASSER
STRUCTURE FLOTTANTE POUR PURIFIER L'EAU CONTAMINÉE PAR DES HYDROCARBURES

(30) Priority: 14.03.2014 IT RM20140133
(43) Date of publication of application: 18.01.2017
(73) Proprietor: Servimar S.r.l., 66026 Ortona (IT)
(72) Inventor: BOROMEO, Carlo, I-66026 Ortona (IT)
(74) Representative: Celona, Antonio
(86) International application number: PCT/IB2015/051905
(87) International publication number: WO 2015/136508

(56) References cited:
- GB-A- 2 033 786
- US-A- 3 992 292
- US-A- 5 085 770
- US-A- 5 143 629
- US-A- 5 888 406

## Description

### Field of the invention

The present invention relates to a floating structure for extracting and recovering hydrocarbons, hydrocarbon-containing compounds and petroleum substances in general from the water surface of the sea, lakes or rivers.

### Background of the invention

Hydrocarbons are stable compounds consisting of carbon and hydrogen. Petroleum is now the main starting substance for the production of cyclic and aromatic straight- or branched- chain hydrocarbons and derivatives thereof.

In fact, although crude petroleum contains small amounts of oxygen, nitrogen and sulphur, its main components are hydrocarbons.

Petroleum-derived chemical substances are widely employed, not only for producing energy such as kerosene, petrol, naphtha and fuel oils, by combustion, but also for manufacturing innumerable products, such as plastics, synthetic fibres and pharmaceutical products.

In addition to currently being one of the main sources of energy and hence of development, and to be present in innumerable quantities of substances, hydrocarbons are also one of the main environmental pollutants, of the marine environment in particular. Pollution that occurs at every stage of the product life cycle, from manufacture until disposal of the residues.

As is known from basic chemistry, organic compounds consisting of chains with four-five carbon atoms have low solubility in water, while compounds containing chains with more than five carbon atoms are insoluble in water.

Hydrocarbons and compounds containing hydrocarbons are typically insoluble in water and, form a petroleum film, and therefore a pollutant spot, above the water surface when spilled into the sea.

One of the stages that presents the highest environment risk is the one relating to sea transport when, for various intentional or unintentional or unintentional reasons, tons and tons of crude petroleum or derivatives thereof are spilled into the sea, polluting the marine environment and the coastal marine environments in particular, with serious negative social and economic impact. Consider tourist sites, which can also be subject to a total collapse in the event of pollution; the damage to the ecosystem, human and animal health through to the damage to the fishing industry. In addition to the transport there is also the extraction phase, of crude petroleum for example, that increasingly relates to underwater deposits, which is also a significant source of seawater hydrocarbon pollution.

The need to produce effective systems capable of rapidly intervening for the cleansing of contaminated areas and with equally rapid execution methods, is therefore widely acknowledged.

Research activity in this field relates to hydrocarbon elimination and recovery means and to decontamination means of polluted environments in general. The most well-known means developed against hydrocarbon pollution include:
- floating booms that allow the containment and concentration of the oil spot,
- absorbent booms,
- mechanical skimmers or skimmers.

Floating booms are somewhat ineffective in the event of the presence of marine currents, even of low intensity, but are used all the same with the aim of preventing spreading and of intervening with the appropriate equipment so as to operate with a high concentration of product.

Absorbent booms have little efficacy in the event of high viscosity materials.

Highly effective mechanical skimmers include the so-called oleophilic skimmers capable of recovering the oily part floating on the water regardless of the thickness of the hydrocarbon film, being also effective for treating oily substances having different viscosity, typically with viscosity ranging between 1000 and 20000 cP. Other cleansing systems make use of techniques that lead to a chemical transformation of the hydrocarbons, including
- biodegradation techniques by means of the use of particular bacterial colonies,
- and direct chemical processes.

Biodegradation techniques relate to very complex interventions that also depend on the type of hydrocarbon and on the environmental conditions, moreover the effects that these processes can have on the environment or even on the food chain in the long-term are little known. The chemical processes can in turn produce other types of contamination.

Despite the great importance of the decontamination process and despite the advances achieved with this aim, there remains much to do for the purposes of the research into truly effective systems and techniques.

A hydrocarbon cleansing technique that is purely mechanical, efficient, easy-to-use and is not the source of a different type of pollution would be extremely advantageous. A technique that is used as previously mentioned, is the one that utilises oleophilic skimmers, which consists of the mechanical separation of hydrocarbons from other fluid substances, particularly water. This technique uses special devices, indeed known as oleophilic skimmers that, among other things, allow recovery of the hydrocarbons that produced the contamination.

In the present context, oleophilic material means a material that is water-repellent and has a strong affinity with oily substances such as hydrocarbons, which adhere to the surface of said material. US 5888406 A describes a floating structure for removing and collecting hydrocarbons from the water according to the preamble of claim 1.

### Summary of the invention

One aim of the present invention is to provide a floating structure for cleansing of water contaminated by hydrocarbons, but also for recovering said hydrocarbons, that is simpler, more economical and effective compared to known solutions.

The object of the present invention is thus a floating structure for removing and collecting hydrocarbons, or compounds containing hydrocarbons, from the water surface, which, in accordance with claim 1, comprises one central body; at least one oleophilic skimmer, or oil skimmer; and at least one suction hood;
said at least one skimmer being constrained to said central body and being housed within said suction hood,
said suction hood being constrained to said central body and being adapted to produce an air current on the water surface towards said at least one skimmer, wherein the suction hood has a hollow shape having a side surface that encloses the central body,
wherein said suction hood comprises upper panels that are integrally fixed to an upper end of the central body, and lower panels that are hinged to respective upper panels; said lower panels being equipped with peripheral floats adjacent and below a lower end thereof,
wherein at least one lower panel, arranged at the at least one skimmer, is provided with longitudinal slits for the passage of hydrocarbons within the suction hood, and wherein the floating structure has a weight such that when the floating structure is placed in water, the peripheral floats are entirely submerged, whereby the slits are partially above the water level.

Advantageously, thanks to the fact that the lower panels are each provided with a peripheral float and that each lower panel is hinged to a respective upper panel, the floating structure can be provided with stability when it is placed in water. In addition, a level of stability is achieved such as to allow use of the floating structure in even rough sea conditions.

Advantageously, the suction hood can have a substantially closed side surface with respect to the water level, for example through the use of flexible elements fixed between a lower panel and the adjacent lower panel.

A further advantage is given by the fact that at least one lower panel is provided with at least one passage, for example one or more slits for the hydrocarbons; the air flow directed toward the inside of the suction hood, which mainly passes through the slits, is thus optimised, and the hydrocarbons are, at the same time, prevented from escaping from the inside area of the suction hood.

Preferably, the peripheral floats are adjacent and below the respective movable panels, contributing to advantageously keeping the slits partially above the water level, thereby allowing the hydrocarbons to enter the inner area of the hood, in rough sea conditions in particular. Advantageously, the weight of the structure itself is predetermined in the design stage so that the peripheral floats are entirely submerged when the structure is in water; this configuration also contributes to keeping the slits partially above the water level.

Preferably, the lower panels are quadrangular, rectangular or square in shape, and the lower and upper ends of the lower panels correspond to the two respective sides of the rectangle. Preferably, the slits are arranged side by side and parallel to each other, and they have an elongated shape, such as to have their greater size that is substantially parallel to the direction of the minimum distance between the lower and upper end of the lower panels. Preferably, the larger size or length of the slits is equal to at least 1/3 or 1/2 of the minimum distance between the lower and upper end of the lower panels.

Advantageously, the at least one lower panel provided with slits is substantially arranged at the at least one skimmer; preferably, at least two skimmers are provided that are fixed to respective sides of the central body, and two respective lower panels are provided with slits; even more preferably, four skimmers are provided that are fixed to respective sides of the central body, and four respective lower panels are provided with slits.

Advantageously, the floating structure can be produced for:
- a stationary use, for example, being anchored to fixed port, lake, river structures and the like;
- a movable use, being housed in a nautical means or dragged.

In addition, the floating structure of the invention can be rendered self-propelled by a remote-controlled propulsion.

Advantageously, in a possible variant, the at least one skimmer can comprise:
- two rollers defining respective longitudinal axes parallel to each other and placed at a predetermined distance from one another,
- a belt made of oleophilic material, suitable for collecting the hydrocarbons floating on a water surface, said belt defining a closed path that passes outside of said rollers, developing in a transverse direction with respect to said longitudinal axes, said belt being kept tensioned by said rollers and being partially submerged in water,
- a scraper for removing the hydrocarbons collected by the belt,
- a tank for recovering the hydrocarbons removed by said scraper,
- a conduit, which connects the scraper with said tank, for conveying the hydrocarbons removed by the belt by said scraper towards said tank. The skimmer can thus be single-belt or multiple-belt depending on the drainage flow to be obtained. Advantageously, the tank is an integral part of the skimmer and occupies the interior space defined by the oleophilic belt and by the rollers themselves.

Advantageously, a supplementary tank can be arranged outside of said inner space, and inside the floating structure.

A further aim of the present invention is to provide a method, according to claim 10, for cleansing of water contaminated by hydrocarbons using the aforementioned floating structure, said method comprising the following steps:
- starting the suction system to generate an air current on the water surface,
- collecting the hydrocarbons pushed by said air current towards said at least one oleophilic skimmer,
- removing the hydrocarbons from said oleophilic skimmer,
- conveying the removed hydrocarbons into at least one tank.

The dependent claims describe preferred embodiments of the invention, forming an integral part of the present description.

### Brief description of the drawings

Further characteristics and advantages of the invention will become clearer in the light of the detailed description of a preferred, but non-exclusive, embodiment of a floating structure according to the invention, illustrated by way of a non-limiting example, with the assistance of the accompanying drawings, wherein:
Fig. 1 represents a diagram of a partially represented skimmer submerged in the water to be decontaminated;
Fig. 2 represents a top view of the floating structure according to the invention,
Fig. 3 represents a sectional view of the floating structure according to the invention,
Fig. 4 represents a side view of the floating structure according to the invention.
Fig. 5 represents a perspective view of a skimmer that can be employed in the floating structure according to the invention;
Fig. 6 represents a longitudinal sectional view of the skimmer of Fig.5,
Fig. 7 represents a side view of the inside of the skimmer of the Fig. 5,

In the drawings themselves, like elements are identified by like numerical references.

### Detailed description of preferred embodiments of the invention

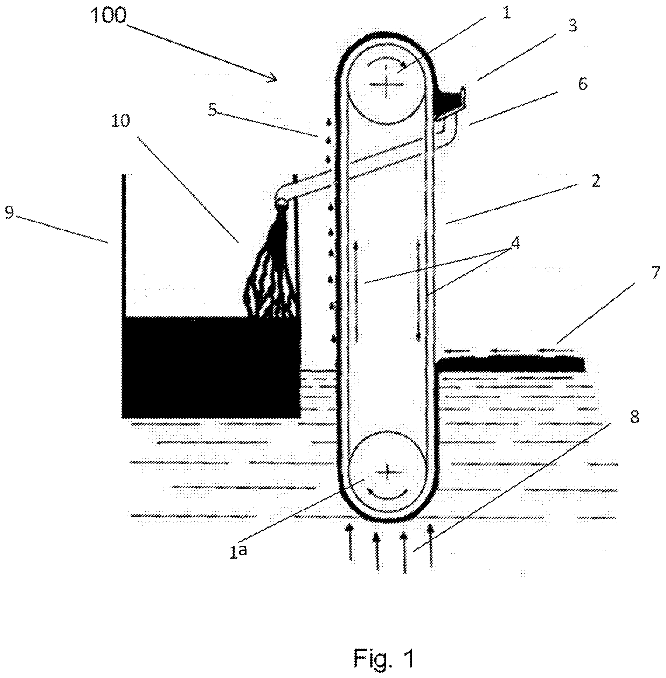

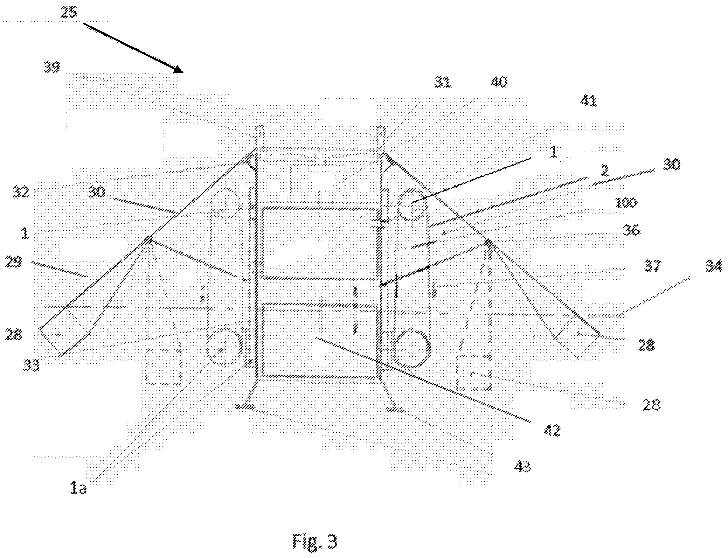

Fig. 1 represents a simplified diagram of a type of skimmer that can be employed in the floating structure for cleansing of the water from the hydrocarbons spilled therein, according to the invention. The belt skimmer, which in Figure 1 is seen partially submerged in the water to be cleansed and is globally indicated by the numerical reference 100, comprises two rollers 1, 1a, placed at a certain distance from one another, which drag a belt 2, made of an oleophilic material, preferably made of a polymeric material, such as polypropylene, polyethylene or neoprene. The lower roller 1a can have a greater diameter than the diameter of the upper roller 1 (Figure 3). On account of its properties and of its movement, the oleophilic belt 2, establishes a regimen of flow of the hydrocarbon film 7 present on the water surface, as represented by the horizontal arrows, said hydrocarbon film adhering to the outer surface of said belt. The decontaminant action can be enhanced by the presence of a plurality of skimmers comprised in the floating structure according to the invention. A floating structure according to the invention is also equipped with a suction hood, which generates an air current on the water surface, towards the oleophilic belt. This distinctive characteristic of the floating structure according to the invention is particularly advantageous in that the flow towards the oleophilic belt of the hydrocarbon film, which floats on the water, is markedly enhanced by the air current produced by the suction hood, ensuring an inflow of hydrocarbons towards the oleophilic belt even in the presence of strong sea currents.

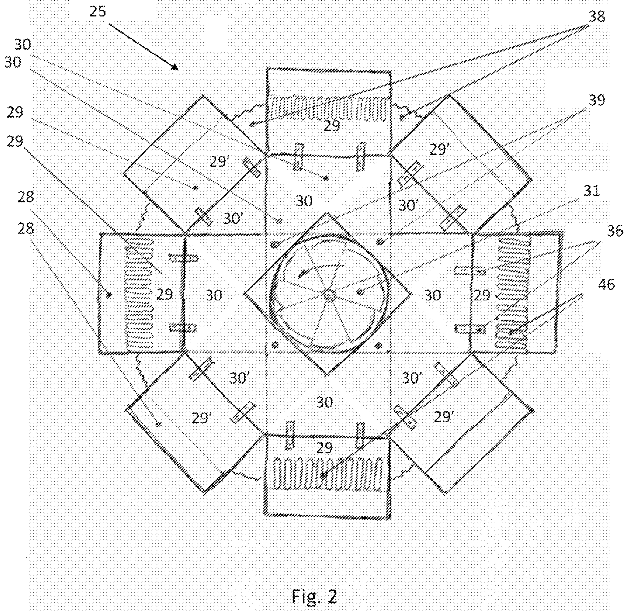

Figures 2, 3 and 4 respectively represent a top, sectional and side view of the floating structure 25 according to the invention.

According to a particularly preferred embodiment, the floating structure 25 has a central body 33, which has the shape of a rectangular parallelepiped and acts as a load-bearing element.

The floating structure 25 comprises four oleophilic belt skimmers 100, of the type described below, each of which is constrained to a respective side of the central body 33.

The floating structure further comprises a suction hood, which operates by means of a fan 31.

Said fan 31 and the relative drive motor 40 are housed in the upper portion of the central body 33.

The central body 33 is also equipped with side openings, thanks to which passage of the air current generated by the fan 31 is possible.

The suction hood also comprises four upper panels, or fixed, quadrangular panels 30, one for each side of the central body 33, four upper panels, or fixed, triangular panels 30', four lower panels, or movable panels, 29 hinged to the fixed, quadrangular panels 30 and four lower panels, or movable panels, 29' that are hinged to the fixed, triangular panels 30'. The fixed panels and the movable panels are respectively distal from and proximal to the water surface when the floating structure is placed in water. These fixed and movable panels are part of the side surface of the suction hood.

The fixed panels 30, 30' have an upper end and a lower end. The upper end of each fixed quadrangular panel 30 is constrained, by means of suitable fixing means 32, to a respective side of the upper portion of the central body 33, so that the lower end of each fixed quadrangular panel 30 is spaced from the respective side of the central body 33; the fixed quadrangular panels 30 are intercalated by said four fixed triangular panels 30', which are also constrained to the central body 33 by fixing means 32, so as to form a closed side surface that can be circumscribed by a truncated pyramid-shaped surface.

Each movable panel 29, 29' has an upper end and a lower end.

The upper end of each movable panel 29 and 29', is respectively hinged by suitable hinges 36, at the lower end of each fixed panel 30, thus at each side opposite to the fixing side of each fixed quadrangular panel 30 to the central body 33, and at the lower end of the fixed triangular panels 30'.

The four skimmers 100, constrained to the central body 33, are therefore housed inside the suction hood.

Thanks to the fact that the movable panels 29, 29' are hinged to the respective fixed panels 30, 30', when the floating structure 25 is rested on dry land, the movable panels 29, 29' can assume a vertical position, so as to make the floating structure 25 more manageable when not in use. When positioning the floating structure 25 on the ground, it can also rest on feet 43 secured to the central body 33. Hooks 39, also fixed to the central body 33, are provided for hoisting and positioning by means of a winch.

Peripheral floats 28 or reserve buoyancies are fixed at the lower end of each movable panel 29, 29', thus at each free end of the movable panels 29, 29' opposite to the hinged side. In particular, the peripheral floats 28 are arranged below the respective movable panels 29, 29'. In more in detail, the weight of the floating structure itself ensures that the floats 28 are constantly below sea level, so that the slits with which at least some of the lower panels are provided are partially submerged and partially above sea level - as will be further described below - allowing the hydrocarbons to enter. The determination of a weight of the floating structure and of a floating capacity of the peripheral floating 28 such that the floats 28 are constantly kept below the waterline, falls within the knowledge of persons skilled in the art.

The suction hood, with reference to Fig. 2, is also equipped with flexible seal elements or flexible small skirt seals 38. It is noted that the surface formed by the set of movable panels 29, 29' is rendered closed by interposition of said flexible small skirt seals 38. Advantageously, the movable panels 29 hinged to the fixed quadrangular panels 30, and thus the movable panels 29, which face the four sides of the central body 33, are equipped with longitudinal slits, or suction slits, 46 to increase the flow rate towards the oleophilic belts 2. Said suction slits 46 are produced in the movable panels 29 in such a position as to be above the waterline 34, i.e. partially above sea level, when the floating structure is placed in water, thanks to the peripheral floats 28 (Figure 3). According to this embodiment, the slits 46 have an elongated shape, such as to have their greater size substantially parallel to the direction of the minimum distance between the lower and upper ends of the lower panels. The suction system of the suction hood thus comprises the fan 31. The suction system, together with the shape of the suction hood, is suitable for producing a suction flow that generates an air current induced on the water surface towards the oleophilic belts 2 of the skimmer 100, thereby facilitating the collection of the hydrocarbons present on the water surface by the aforementioned belts. Floating means, comprising, for example, at least one canister 42, which can be placed within the central body 33, at its lower part, are provided in addition to the peripheral floats 28. In the example shown, the central body 33 has the shape of a vertically-extending rectangular parallelepiped. In addition to the canister 42 for flotation, the central body 33 can comprise, preferably in its interior, a collecting tank 41 for the hydrocarbons removed by the skimmer belts 100. In Fig. 3 said tank 41 is placed in the central part of the central body 33. The motor 40 for operation of the fan 31 is provided in the upper part of the central body.

The floating structure 25 can comprise one or more skimmers 100 of the type with integrated tank 9, as will be described below. The skimmers 100 are fixed on the side walls of the central body 33, arranged with the longitudinal axis passing through the two rollers 1,1a parallel or slightly inclined to the vertical axis of said central body 33. In the example shown in the drawings, these skimmers 100 are four in number. In Figs. 2-4 the skimmers 100 are represented by the upper roller system 1 and lower roller system 1a and by the oleophilic belt 2. In figure 3 the sense of rotation (clockwise) of the belt 2 is also represented by the arrow 37. A preferred embodiment and operation of a skimmer 100 is described below. This skimmer 100, schematically represented in Fig. 1, comprises
- at least two rollers 1,1a, defining respective longitudinal axes, parallel to each other and placed at a predetermined distance one from the other,
- at least one belt 2 made of oleophilic material, suitable for collecting the hydrocarbons 7 floating on the water surface, and defining a closed path that passes on the outside of said rollers 1,1a, extending in a transverse direction with respect to said longitudinal axes, said belt being kept tensioned by the rollers 1,1a,
- a scraper 3 for removing the hydrocarbons 7 collected by the oleophilic belt 2,
- a tank 9 for recovering the hydrocarbons 7 removed by said scraper 3,
- a conduit 6, which connects the scraper 3 with said tank 9, for conveying the hydrocarbons 7 removed by said scraper 3 towards said tank 9.

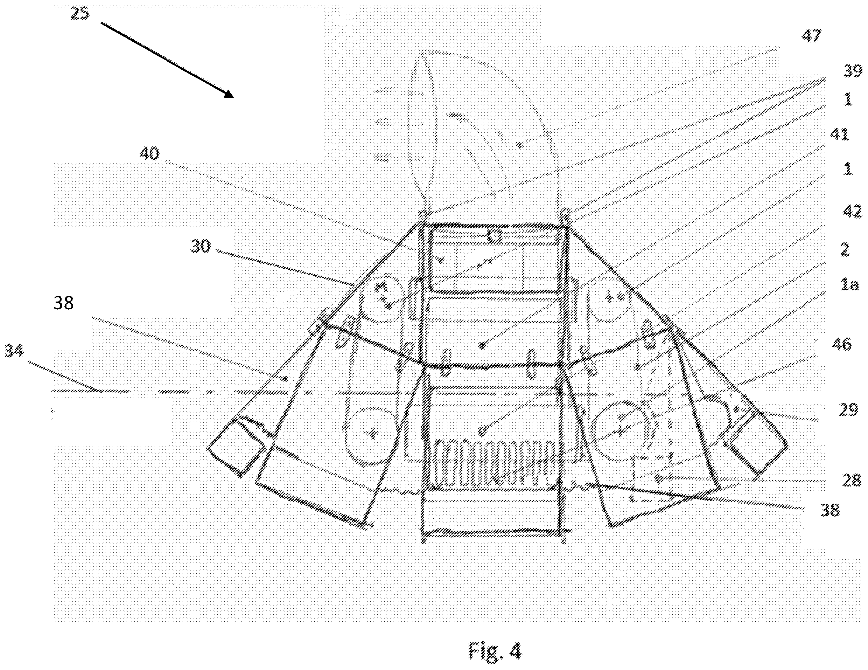

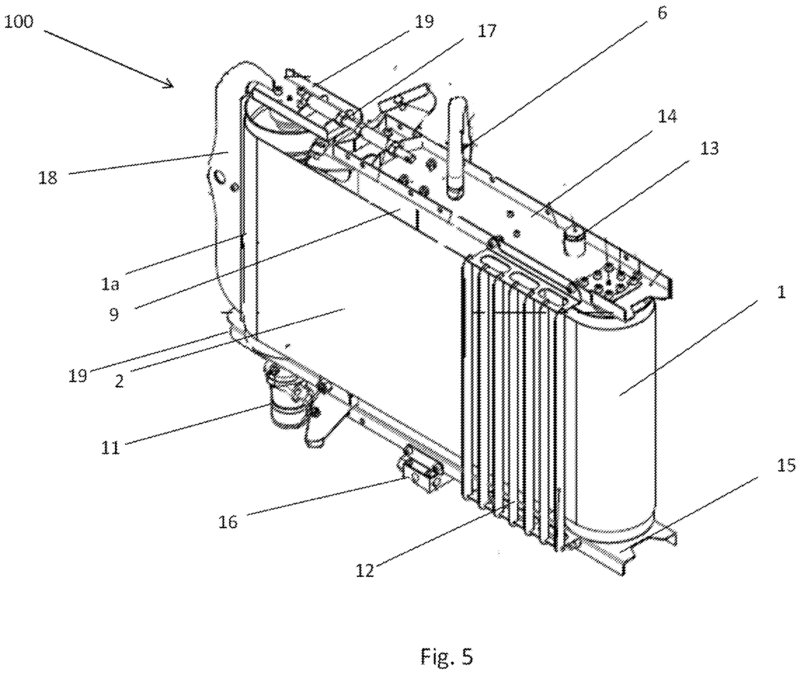

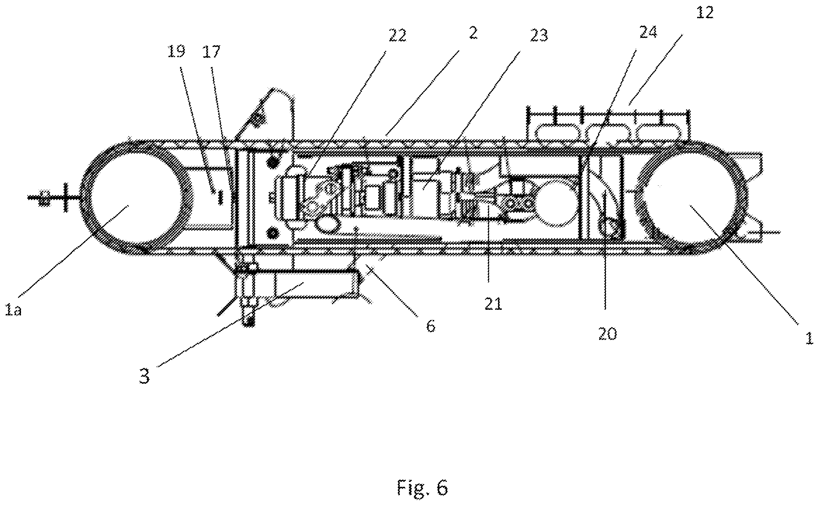

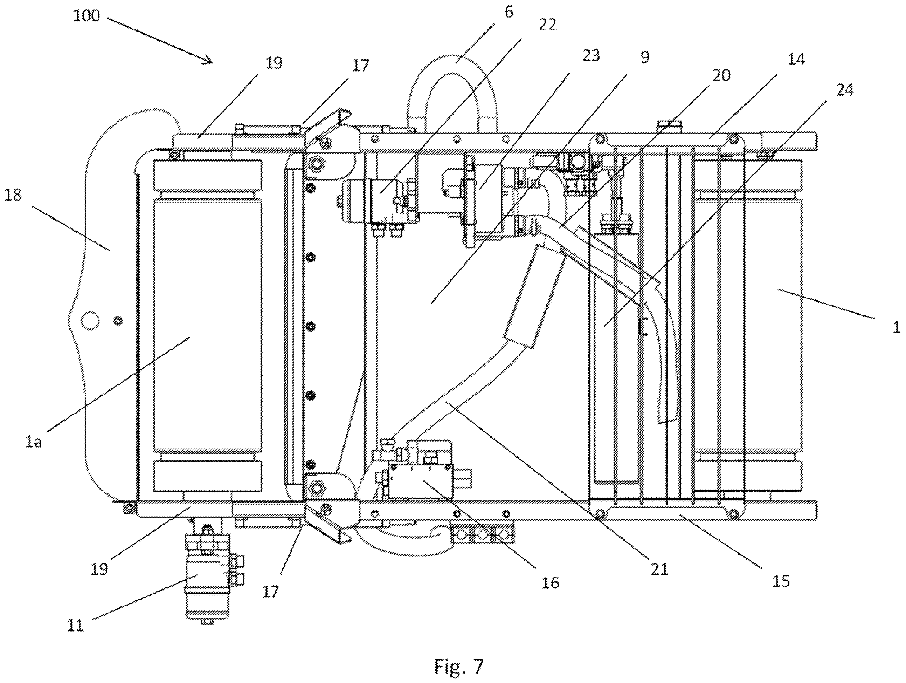

The skimmer can thus be single-belt or multiple-belt depending on the drainage flow to be obtained. In the preferred variant of the skimmers that are placed inside said floating structure, the tank 9, see Fig. 5-7, having for example the shape of a rectangular parallelepiped, is located in the inner space delimited by the oleophilic belt 2 and by the rollers 1 and 1a. The tank 9, for example comprises two greater side walls that are parallel to the flat surface of the oleophilic belt 2, and two smaller side walls that are perpendicular to the two greater side walls. The tank 9 also comprises two lids 14 and 15, substantially corresponding to the base surfaces of the parallelepiped, which surface is perpendicular to all of the aforementioned side walls and to the longitudinal axes of the rollers 1 and 1a. The tank 9, in particular by means of the two lids 14 and 15, also serves as a frame and support for the skimmer 100. Figure 6 represents a longitudinal section of the skimmer according a plane that is perpendicular to the axis of rotation of the rollers 1,1a. The scraper 3 and the conduit 6 for the conveyance of the skimmed hydrocarbon into the tank 9 are visible in this drawing. The tank 9 also serves as support, see Fig. 7, for a number of components that serve for skimmer 100 operation. Starting from the left, Fig. 7, the seeger 18, the drive roller 1a with the respective motor 11, the brackets 19 for supporting the drive motor 1a and the tie rods 17, which have the function of adjusting the tension of the oleophilic belt 2, are visible. In addition, the motor unit 22, which drives the pump 23 for the automatic drainage of the tank 9, are visible mounted on the tank 9. The inlet tube 20, which draws in the hydrocarbons that have been poured into the tank 9, and the delivery tube 21 for pouring the hydrocarbons into a special floating cistern or tank, are connected to the pump 23. A flow regulator that modulates the flow so as to keep the emission towards the floating cistern or tank comprised between a minimum level and a maximum level, depending on the speed of the device, is indicated with reference 16. The pump 23 is controlled by a level sensor 9 of the tank, for example a float, not shown in the drawing, which with the rising of the level of hydrocarbons will cause drainage of the tank 9 into a special cistern. The skimmer 100 can be raised by means of a special hooking bracket indicated in Fig. 3 and 4 with the reference number 24. The drive roller 1, which rotates the oleophilic belt 2, and the drain pump 23 of the tank are controlled by a oleodynamic control unit driven by an electric or diesel motor. The power supply can also be obtained with a suitable photovoltaic system. As previously mentioned, one or both of the two rollers 1, 1a are drive motors and allow the belt 2 that is partially submerged in the water, to run thus collecting the hydrocarbons present on the water surface. As described, hydrocarbons collection is facilitated by the presence of the suction hood.

Merely by way of a non-limiting example, the suction system can be designed to produce a suction flow with a flow rate equal to about 7000 m³/hour and the speed of the air current induced on the water surface to be decontaminated is equal to about 0.7-1.0 m/s. Other variants can provide for a floating structure also having a suction hood with a different shape than the one described and thus also with a different number of fixed and movable panels. As an alternative to the fixed panels 30, 30' can be used, for example a single, truncated-pyramid structure internally hollow. Or, as an alternative to the fixed panels 30, 30' and to the movable panels 29, 29', a single flexible or semi-flexible structure can be used, having for example a cone or truncated cone shape, having the same function as the fixed panels 30, 30' and the movable panels 29, 29'.

The particular shape of the central body 33 has also been described merely by way of example, it being evident that other embodiments are possible, just as the number of skimmers 100 provided for within the suction hood can differ. In one version, the floating structure 25 can provide for a suction hood having panels that are completely or partially lined with a photovoltaic sheet suitable for producing clean energy to power the motors provided for within the one or more skimmers 100 and the motor 40 that drives the fan 31. The propulsion system can also be produced as schematically indicated in Fig. 4, by exploiting the fan intake air 31 that is expelled from the floating structure 25, conveying it by means of one or more tubes 47 that vertically depart from the suction system and then divert in a direction parallel to the water surface. The floating structure 25 can thus autonomously move on the water surface under the control of a remote-controlled system, for example adapted to rotate the tube 47 around a vertical axis. For example, the tube can be formed by two tubular zones, of which a first area, proximal to the fan 31, having a substantially vertical axis, and a second area, having a substantially perpendicular axis with respect to the axis of the first area. The floating structure 25 can also be dragged by a nautical means onto which it can be suitably hooked, or, when necessary, can also operate anchored to a fixed structure. The system described is simple, effective, non-pollutant and easy to implement.

## Claims

1. A floating structure (25) for removing and collecting hydrocarbons from the water surface,
said floating structure (25) comprising:
- a central body (33),
- at least one skimmer (100),
- and at least one suction hood,
said at least one skimmer (100) being constrained to said central body (33) and being housed within said suction hood,
said suction hood being constrained to said central body (33) and being adapted to produce an air current on the water surface towards said at least one skimmer (100), **characterised in that** the suction hood has a hollow shape having a side surface that encloses the central body (33),
**in that** said suction hood comprises upper panels (30, 30') that are firmly secured to an upper end of the central body (33), and lower panels (29, 29') that are hinged to respective upper panels (30, 30'); said lower panels (29, 29') being equipped with peripheral floats (28) adjacent and below a lower end thereof,
**in that** at least one lower panel (29), arranged at the at least one skimmer (100), is provided with longitudinal slits (46) for the passage of hydrocarbons within the suction hood,
and wherein the floating structure (25) has a weight such that when the floating structure (25) is placed in water, the peripheral floats (28) are entirely submerged, whereby the slits (46) are partially above the water level.

2. A floating structure (25) according to claim 1, wherein said at least one skimmer (100) is secured onto a side wall of said central body (33).

3. A floating structure (25) according to any one of the preceding claims, wherein said suction hood comprises a suction system formed by at least one fan (31) supported by said central body (33).

4. A floating structure (25) according to claim 3, wherein said central body (33) comprises in its interior, starting from the upper part, an engine (40) for starting up said suction system, a tank (41) for the recovered hydrocarbons, and at least one central float (42).

5. A floating structure (25) according to any one of claims 3 or 4, comprising a propulsive system provided with at least one tube (47) adapted to convey the fan (31) intake air and to direct the same floating structure.

6. A floating structure (25) according to claim 5, wherein said at least one tube (47) has a first area having a vertical axis, proximal to the fan (31), and a second area with axis substantially perpendicular to the axis of the first area, so as to direct said air in a direction that is substantially parallel to the water surface, and rotatable about said vertical axis.

7. A floating structure (25) according to any one of the preceding claims, wherein the suction hood has the shape of a truncated cone or truncated pyramid.

8. A floating structure (25) according to any one of the preceding claims, wherein the at least one skimmer is a belt skimmer.

9. A floating structure according to any one of the preceding claims, comprising flexible elements (38) that are secured between consecutive lower panels (29, 29') so as to define a closed side surface that prevents the escape of the hydrocarbons from the inside area of the suction hood.

10. A method for cleansing water contaminated with hydrocarbons using a floating structure according to any one of the preceding claims, said method comprising the following steps:
- starting the suction hood to generate an air current on the water surface,
- collecting the hydrocarbons (7) pushed by said air current towards said at least one skimmer (100),
- removing the hydrocarbons from said skimmer (100),
- conveying the removed hydrocarbons (10) into at least one tank.

11. A method according to claim 10, wherein said floating structure (25) can move autonomously on the water surface, by means of a propulsive system provided with at least one tube (47) that conveys the fan (31) intake air, or by means of a remote-controlled system, or can be dragged by a suitable nautical means.

## Patentansprüche

1. Schwimmende Struktur (25) zum Entfernen und Sammeln von Kohlenwasserstoffen von der Wasseroberfläche, wobei die Struktur (25) aufweist:
- einen zentralen Körper (33),
- zumindest einen Abscheider (100),
- und zumindest eine Absaughaube,
wobei der zumindest eine Abscheider (100) auf den zentralen Körper (33) begrenzt und innerhalb der Absaughaube untergebracht ist und die Absaughaube auf den zentralen Körper (33) begrenzt ist und geeignet ist, einen Luftstrom von der Wasseroberfläche in Richtung des zumindest einen Abscheiders (100) zu erzeugen,
**dadurch gekennzeichnet,**
**dass** die Absaughaube eine hohle Form aufweist, mit einer Seitenfläche, die den zentralen Körper (33) umschließt,
**dass** die Absaughaube obere Platten (30, 30'), die integral an einer oberen Seite des zentralen Körpers (33) befestigt sind, und untere Platten (29, 29') aufweist, die an den zugehörigen oberen Platten (30, 30') gelenkig angebracht sind, wobei die unteren Platten (29, 29') mit außenliegenden Schwimmern (28) ausgerüstet sind, die an den unteren Enden der unteren Platten (29, 29') angrenzen,
**dass** zumindest eine an dem zumindest einen Abscheider (100) angeordnete untere Platte (29) mit länglichen Schlitzen (46) zum Durchlass von Kohlenwasserstoffen innerhalb der Absaughaube versehen ist, und
**dass** die schwimmende Struktur (25) ein Gewicht derart aufweist, dass wenn die schwimmende Struktur (25) ins Wasser gesetzt wird, die außenliegenden Schwimmer (28) vollständig unter Wasser sind, während die Schlitze (46) partiell oberhalb der Wasseroberfläche sind.

2. Schwimmende Struktur (25) gemäß Anspruch 1, wobei der zumindest eine Abscheider (100) an einer Seitenwand des zentralen Körpers (33) befestigt ist.

3. Schwimmende Struktur (25) gemäß einem der vorigen Ansprüche, wobei die Absaughaube ein Absaugsystem aufweist, das aus zumindest einem Gebläse (31) besteht, das von dem zentralen Körper (33) getragen wird.

4. Schwimmende Struktur (25) gemäß Anspruch 3, wobei der zentrale Körper (33) in seinem Inneren - von oben nach unten - einen Motor (40) zum Betrieb des Absaugsystems, einen Tank (41) für die geborgenen Kohlenwasserstoffe und zumindest einen zentralen Schwimmer (42) aufweist.

5. Schwimmende Struktur (25) gemäß einem der Ansprüche 3 oder 4, aufweisend ein Antriebssystem, das mit zumindest einem Rohr (47) versehen ist, das geeignet ist, die Ansaugluft des Gebläses (31) zu fördern und die schwimmende Struktur zu steuern.

6. Schwimmende Struktur (25) gemäß Anspruch 5, wobei das zumindest eine Rohr (47) einen ersten Bereich mit vertikaler Achse in der Nähe des Gebläses (31) und einen zweiten Bereich mit einer Achse aufweist, die im Wesentlichen senkrecht zur Achse des ersten Bereichs liegt, so dass die Luft in eine Richtung gelenkt wird, die im Wesentlichen parallel zur Wasseroberfläche ist, und um die vertikale Achse rotieren kann.

7. Schwimmende Struktur (25) gemäß einem der vorigen Ansprüche, wobei die Absaughaube die Form eines Kegelstumpfs oder eines Pyramidenstumpfs aufweist.

8. Schwimmende Struktur (25) gemäß einem der vorigen Ansprüche, wobei der zumindest eine Abscheider ein Bandabscheider ist.

9. Schwimmende Struktur gemäß einem der vorigen Ansprüche, aufweisend flexible Elemente (38), die zwischen aufeinander folgenden unteren Platten (29, 29') befestigt sind, so dass eine geschlossene Seitenfläche definiert wird, die den Austritt der Kohlenwasserstoffe aus dem inneren Bereich der Absaughaube verhindern.

10. Verfahren zur Reinigung von mit Kohlenwasserstoffen verunreinigtem Wasser mittels einer schwimmenden Struktur gemäß einem der vorigen Ansprüche, wobei das Verfahren die folgenden Schritte aufweist:
- Inbetriebnahme der Absaughaube, um einen Luftstrom auf der Wasseroberfläche zu erzeugen,
- Sammeln der Kohlenwasserstoffe (7), die durch den Luftstrom zu dem zumindest einen Abscheider (100) getrieben werden,
- Entfernen der Kohlenwasserstoffe von dem Abscheider (100),
- Befördern der entfernten Kohlenwasserstoffe (10) in zumindest einen Tank.

11. Verfahren gemäß Anspruch 10, wobei sich die schwimmende Struktur (25) mittels eines Antriebssystems, das mit zumindest einem Rohr (47) versehen ist, das die Ansaugluft des Gebläses (31) fördert, autonom oder mittels eines ferngesteuerten Systems auf der Wasseroberfläche bewegen kann, oder durch geeignete nautische Mittel gezogen werden kann.

## Revendications

1. Structure flottante (25) pour éliminer et collecter des hydrocarbures de la surface de l'eau,
ladite structure flottante (25) comprenant :
- un corps central (33),
- au moins un écrémeur (100),
- et un moins un couvercle d'aspiration,
ledit au moins un écrémeur (100) étant limité audit corps central (33) et étant logé à l'intérieur dudit couvercle d'aspiration,
ledit couvercle d'aspiration étant limité audit corps central (33) et étant adapté pour produire un courant d'air sur la surface de l'eau en direction dudit au moins un écrémeur (100),
**caractérisée en ce que**
le couvercle d'aspiration a une forme creuse ayant une surface latérale qui renferme le corps central (33),
**en ce que**
ledit couvercle d'aspiration comprend des panneaux supérieurs (30, 30') qui sont intégralement fixés à une extrémité supérieure du corps central (33), et des panneaux inférieurs (29, 29') qui sont articulés sur des panneaux supérieurs respectifs (30, 30') ; lesdits panneaux inférieurs (29, 29') étant équipés de flotteurs périphériques (28) adjacents et en dessous d'une extrémité inférieure de ceux-ci,
**en ce que**
au moins un panneau inférieur (29), agencé au niveau de l'au moins un écrémeur (100), est doté de fentes longitudinales (46) pour le passage d'hydrocarbures à l'intérieur du couvercle d'aspiration,
et **en ce que**
la structure flottante (25) a un poids tel que lorsque la structure flottante (25) est placée dans l'eau, les flotteurs périphériques (28) sont entièrement immergés, moyennant quoi les fentes (46) sont partiellement au-dessus du niveau de l'eau.

2. Structure flottante (25) selon la revendication 1, dans laquelle ledit au moins un écrémeur (100) est fixé sur une paroi latérale dudit corps central (33).

3. Structure flottante (25) selon l'une quelconque des revendications précédentes, dans laquelle ledit couvercle d'aspiration comprend un système d'aspiration formé par au moins un ventilateur (31) supporté par ledit corps central (33).

4. Structure flottante (25) selon la revendication 3, dans laquelle ledit corps central (33) comprend dans son espace intérieur, en partant de la partie supérieure, un moteur (40) pour démarrer ledit système d'aspiration, un réservoir (41) pour les hydrocarbures récupérés, et au moins un flotteur central (42).

5. Structure flottante (25) selon l'une quelconque des revendications 3 ou 4, comprenant un système de propulsion doté d'au moins un tube (47) adapté pour acheminer l'air d'admission de ventilateur (31) et pour diriger la structure flottante elle-même.

6. Structure flottante (25) selon la revendication 5, dans laquelle ledit au moins un tube (47) a une première zone ayant un axe vertical, à proximité du ventilateur (31), et une seconde zone avec un axe sensiblement perpendiculaire à l'axe de la première zone, de manière à diriger ledit air dans une direction qui est sensiblement parallèle à la surface de l'eau, et pouvant tourner autour dudit axe vertical.

7. Structure flottante (25) selon l'une quelconque des revendications précédentes, dans laquelle le couvercle d'aspiration a la forme d'un cône tronqué ou d'une pyramide tronquée.

8. Structure flottante (25) selon l'une quelconque des revendications précédentes, dans laquelle l'au moins un écrémeur est un écrémeur à bande.

9. Structure flottante selon l'une quelconque des revendications précédentes, comprenant des éléments souples (38) qui sont fixés entre des panneaux inférieurs consécutifs (29, 29') de manière à définir une surface latérale fermée qui empêche la fuite des hydrocarbures de la zone interne du couvercle d'aspiration.

10. Procédé pour purifier de l'eau contaminée par des hydrocarbures en utilisant une structure flottante selon l'une quelconque des revendications précédentes, ledit procédé comprenant les étapes suivantes :
- la mise en marche du couvercle d'aspiration pour générer un courant d'air à la surface de l'eau,
- la collecte des hydrocarbures (7) poussés par ledit courant d'air en direction dudit au moins un écrémeur (100),
- le retrait des hydrocarbures dudit écrémeur (100),
- l'acheminement des hydrocarbures éliminés (10) dans au moins un réservoir.

11. Procédé selon la revendication 10, dans lequel ladite structure flottante (25) peut se déplacer de manière autonome sur la surface de l'eau, au moyen d'un système de propulsion doté d'au moins un tube (47) qui achemine l'air d'admission du ventilateur (31), ou au moyen d'un système commandé à distance, ou peut être trainée par un moyen nautique approprié.
